# EUROPEAN PATENT SPECIFICATION

(11) **EP 2 085 370 B1**
(45) Date of publication and mention of the grant of the patent: **12.09.2018**
(21) Application number: 08151026.5
(22) Date of filing: 04.02.2008
(51) Int. Cl.: C04B 40/00

(54) **Setting and hardening accelerator for hydraulic binders in the solid state**
Fester Erstarrungs- und Erhärtungsbeschleuniger für hydraulische Bindemittel
Accélérateur solide de prise et de durcissement pour liants hydrauliques

(43) Date of publication of application: 05.08.2009
(73) Proprietor: Sika Technology AG, 6340 Baar (CH)
(72) Inventor: Gallegos, Pedro, Sindempart, Coquimbo (CL); Arancibia, Lili, Ñuñoa-Santiago (CL); Olivares, Hugo, Santiago (CL); Lindlar, Benedikt, 78467 Konstanz (DE)
(74) Representative: Sika Patent Attorneys

(56) References cited:
- EP-A- 1 167 317
- EP-A- 1 422 205
- WO-A-00/78688

## Description

### TECHNICAL FIELD

The invention relates to a setting and hardening accelerator for hydraulic binders in the solid state and to a process for producing a setting and hardening accelerator.

### BACKGROUND OF THE INVENTION

Many substances which accelerate the setting and hardening of hydraulic binders such as concrete are known. Customarily used substances are, for example, strongly alkaline substances such as alkali metal hydroxides, alkali metal carbonates, alkali metal silicates, alkali metal aluminates and alkaline earth metal chlorides as well as alkali free accelerators. Accelerators for hydraulic binders are mostly used for sprayed concrete. Sprayed concrete and the spraying machines used for this purpose, e.g. Sika® Aliva® spraying machines, are generally known. The accelerators, which are added in the region of the spray nozzle are usually introduced in liquid form.

EP 1 167 317 discloses a method for producing setting and hardening accelerators based on fluoride-containing aluminum salts or reaction products of aluminium hydroxide with hydrofluoric acid, respectively.

EP 1 422 205 discloses accelerators based on aluminum sulfate, aluminium hydroxide and mineral acid in aqueous solution.

WO 00/78688 is concerned with a liquid accelerating admixture for sprayed concrete comprising the reaction product of aluminium hydroxide with an organic acid, aluminium sulphate, and at least one alkanolamine as well as a corresponding production method.

EP 0 946 451 81 discloses setting and hardening accelerators in dissolved liquid form for hydraulic binders, which can be more easily mixed into the concrete when the concrete is sprayed. Such a setting and hardening accelerator comprises, inter alia, aluminum hydroxide, aluminum salts and organic carboxylic acids.

These accelerators are usually brought in containers to the spraying apparatus or to the spraying machine. However, a problem with these liquid additives is the storage stability which is frequently unsatisfactory, as a result of which the additives can become unusable on prolonged storage. In addition, these liquid concrete additives have a relatively large volume, which can present supply problems and high transport costs.

### SUMMARY OF THE INVENTION

Accordingly, one object of the invention is to provide an accelerator which overcomes the afore mentioned problems.

According to the invention, this is achieved with the inventive setting and hardening accelerator in the solid state of the first claim.

The advantages of the invention can be seen, inter alia, in the fact that the solid setting and hardening accelerator of the invention can be stored for a long time and less stability problems occur compared to conventional liquid accelerators. In addition, compared to solid accelerators which have been prepared by spray drying the known liquid accelerators, the inventive solid accelerator requires less energy for its production since only one part of the accelerator needs to be brought from the liquid into the solid state, e.g. by spray drying. This brings economic and ecological advantages. Furthermore, the volume of the inventive solid accelerator is at least a factor of two smaller than when liquefied accelerators would be used, as a result of which lower transport costs are incurred, less storage space is needed and environmental pollution is reduced.

Further advantageous embodiments of the invention may be derived from the description and the dependent claims.

### DESCRIPTION OF THE PREFERRED EMBODIMENTS

A setting and hardening accelerator in the solid state according to the invention is obtainable by a process characterized in that the process comprises at least step (a) wherein at least one liquid component **A** comprising at least the reaction product of acid and aluminum hydroxide is brought into the solid state to receive a solid component **A;** and at least step (b) wherein the solid component **A** obtained in step (a) is mixed with at least one solid component **B,** wherein the solid component **B** comprises or consists of aluminum sulphate. Optionally, at least one additional solid component C may be added in an optional step (c) to the solid component **A** and the solid component **B;** wherein the acid is formic acid, acetic acid and / or oxalic acid.

Preferably, in step (a) the liquid component **A** is brought into the solid state by spray drying. The process of spray drying is well known.

The liquid component **A** comprising at least the reaction product of an acid an aluminum hydroxide is preferably obtainable by mixing at least water, 1 to 90 wt-% acid and 5 to 50 wt.-% aluminum hydroxide, based on the total weight of the liquid component **A.**

The term "liquid component **A**" here refers to a component **A** which can be in the form of a solution which may contain to some extent finely dispersed particles or which is in the form of a dispersion.

Amorphous aluminum hydroxide is advantageously used as aluminum hydroxide. The aluminum hydroxide can also be used in the form of aluminum hydroxide carbonate, aluminum hydroxysulfate.

In a preferred embodiment, the component **A** is chloride free and preferably also sulfate free. In construction chemistry, the term "sulfate free" and "chloride free" usually means that the accelerator comprises less than 1 weight-% of sulfate ions or chloride ions, based on the total weight of the accelerator.

The component **A** may further comprise additional constituents such as e.g. alkanolamine, magnesium hydroxide (Mg(OH)₂) or another magnesium compound such as a magnesium salt, magnesium oxide or magnesium oxyhydroxide, or manganese sulfate (MnSO₄ x H₂O), ferric sulfate (Fe₂(SO₄)₃ x H₂O), sodium gluconate, silica or further carboxylic acid such as e.g. phosphonobutan-1,2,4-tricarboxylic acid (PBTC) or further liquid constituents known to be used in concrete technology such as corrosion inhibitors, plasticizers, surfactants, heat and light stabilizers, dyes, defoamers, accelerants, retardants, or air pore formers.

Preferably, the liquid component **A** further comprises alkanolamine in an amount of 0.1 to 10wt.-%, based on the total weight of the liquid component **A.** Preferably, diethanolamine is used as alkanolamine.

In a very preferred embodiment, only liquid components are selected as additional constituents which may be added to the liquid component **A.** Thus, the energy needed for the production of the solid accelerator and thus the production costs are reduced, since only few components need to be spray dried. This is an additional advantage compared to conventional accelerators where the liquid accelerator as a whole, also containing solid components or dissolved solid components, is spray dried.

The liquid component **A** is preferably obtained by mixing the following compounds (in weight-% based on the total weight of the liquid component **A):**
- 1 to 90 wt.-%, preferably 5 to 45 wt.-% of the acid
- 5 to 50 wt.-%, preferably 10 to 30 wt.-% of aluminum hydroxide,
- 0-10% magnesium hydroxide (Mg(OH)₂)
- 0-5% manganese sulfate (MnSO₄ x H₂O),
- 0-12% ferric sulfate (Fe₂(SO₄)₃ x H₂O),
- 0-1% of sodium gluconate,
- 0-30% of silica,
- 0-20% of alkanolamine,
- water.

The abovementioned substances are advantageously present as ions in solution but can also be present in complexed form or undissolved form in the accelerator. This is the case especially when the accelerator is in the form of a solution containing to some extent finely dispersed particles or in the form of a dispersion.

The liquid component **A** is then brought into the solid state, preferably by spray drying.

The solid component **B** comprises or consists of aluminum sulfate.

The aluminum sulfate used in component **B** may contain a different amount of crystal water. Preferably, an aluminum sulfate containing about 17% of Al₂O₃ is used, which is typically known as aluminum sulfate tetradecahydrate (Al₂(SO₄)₃*14H₂O). But it is also possible to use other contents, although the amounts to be added then may have to be adapted accordingly. The aluminum sulfate can also be produced by reaction of aluminum hydroxide (alumina hydrated) with sulfuric acid. In general, aluminum sulfate can be produced by reaction of a basic aluminum compound with sulfuric acid.

Preferably, the solid component **B** comprises 1 to 100 wt.-% of aluminum sulfate (Al₂(SO₄)₃*14H₂O), more preferably 40 to 100 wt.-%, even more preferably 60 to 100 wt.-%, based on the total weight of the solid component **B.**

The solid component **B** is directly obtained by using solid components and does not need an additional process step for bringing the component **B** into a solid state. Thus, spray drying is not needed. Preferably, the solid component **B** is a powder.

The solid component **B** may further comprise additional solid constituents such as e.g. magnesium hydroxide (Mg(OH)₂) or another magnesium compound such as a magnesium salt, magnesium oxide or magnesium oxyhydroxide, or manganese sulfate (MnSO₄ x H₂O), ferric sulfate (Fe₂(SO₄)₃ x H₂O), sodium gluconate, silica, silica fume, aluminum polychloride, calcium formiate, calcium nitrate, sodium formiate, sodium nitrate, or sodium glycolate, or further solid constituents known to be used in concrete technology such as solid plasticizers, surfactants, heat and light stabilizers, dyes, defoamers, accelerants, retardants, or air pore formers.

These additional solid constituents may also be added as an additional component **C** in a third step (c) to a solid component **A** and a solid component **B.** Thus the additional component **C** may comprise or consist of magnesium hydroxide (Mg(OH)₂) or another magnesium compound such as a magnesium salt, magnesium oxide or magnesium oxyhydroxide, or manganese sulfate (MnSO₄ x H₂O), ferric sulfate (Fe₂(SO₄)₃ x H₂O), sodium gluconate, silica, silica fume, aluminum polychloride, calcium formiate, calcium nitrate, sodium formiate, sodium nitrate, and/or sodium glycolate, or further solid constituents known to be used in concrete technology such as solid plasticizers, alkanolamine, surfactants, heat and light stabilizers, dyes, defoamers, accelerants, retardants, or air pore formers.

In a very preferred embodiment, the solid component **B** consists only of aluminum sulfate and the additional solid components are added as a separate component **C.**

The weight ratio of the solid component **A** to the solid component **B** in the inventive solid accelerator is between 1:100 to 100:1, preferably between 1:10 to 10:1, more preferably between 1:1 to 1:6, even more preferably between 1:2 and 1:5. Depending on the intended use of the accelerator, the solid components may be mixed in a different ratio to receive accelerators with different properties, i.e. to vary the high early strengths of the compositions comprising hydraulic binders.

Preferably, the solid accelerator of the invention is alkali free. This means that the accelerator preferably comprises less than 1 weight-% of alkali metal ions, based on the total weight of the accelerator.

In a further aspect, the present invention provides a process for producing the inventive solid setting and hardening accelerator, wherein the process comprises the steps of (a) bringing a liquid component **A** comprising at least the reaction product of acid and aluminum hydroxide into the solid state to receive a solid component **A**; and step (b) mixing the solid component **A** obtained in step (a) with a solid component **B,** wherein the solid component **B** comprises or consists of aluminum sulfate; and optionally (c) adding at least one additional solid component **C** to the solid component **A** and the solid component **B.**

The inventive solid accelerator obtained by mixing at least one solid component **A** and at least one solid component **B** is a heterogeneous mixture of different solid particles. This heterogeneous mixture differs from solid accelerators which are obtained by spray drying conventional liquid accelerators, where a homogenous solid mixture is produced.

The process for producing the inventive heterogeneous solid accelerator needs less energy and thus the production costs are reduced, since only few components need to be spray dried. This is an additional advantage compared to conventional accelerators where the liquid accelerator as a whole, also containing solid components or dissolved solid components, is spray dried.

In addition, logistics cost, in particular transportation cost and storage cost can be reduced since the volume of the solid or powdery accelerator is smaller and no unnecessary liquid components need to be transported or stored.

The solid components **A, B** and optionally **C** may be stored separately and mixed together on a construction site or they are preferably mixed and then stored or transported as a heterogeneous mixture. To produce the inventive accelerator, the solid components are given into a container and are optionally stirred.

The solid accelerator according to the invention is stable and can be stored for a long time, preferably for more than three months. Thus, with the inventive solid accelerator no stability problems occur compared to many known liquid accelerators.

The inventive solid setting and hardening accelerator can be used for accelerating the setting and hardening of hydraulic setting compositions comprising at least one hydraulic binder. Thus the inventive accelerator is applicable to accelerate the setting and hardening of any kind of hydraulic or latent hydraulic binders and mixtures containing said binders, like e.g. hydraulic binders which are selected from the group consisting of cement, like Portland cement, lime, slaked lime, slag, gypsum, anhydrite and mixtures containing at least two of said components.

Thus, the inventive solid setting and hardening accelerator can be used for accelerating the setting and hardening of hydraulic setting compositions, e.g. of mortar or concrete. Preferably, the inventive solid setting and hardening accelerator can be used in the dry or wet spraying process, preferably for shotcrete. Since the inventive accelerator is in the solid state, the use in the dry spraying process is particularly preferred.

The inventive solid setting and hardening accelerator can be added to compositions comprising at least one hydraulic binder in the form of a powder, dispersed in water or in a non aqueous solvent or as aqueous solution. If the solid accelerator is dispersed or dissolved in water or in a non aqueous solvent, the liquid optionally contains furthermore a dispersing agent.

In a further aspect, the present invention thus provides a process for accelerating the setting and hardening of hydraulic binders comprising the step of adding the inventive solid accelerator to a composition comprising at least one hydraulic binder, preferably to sprayable concrete mixture, wherein the accelerator is added in the solid form or is dissolved or dispersed in water before adding to the composition comprising at least one hydraulic binder.

When the inventive accelerator is added to the hydraulic binder in the solid form, preferably in the form of a powder, then said accelerator can be added to a dry material which consists of the inorganic binder or contains the inorganic binder. It is furthermore also possible to use a premixture of the set accelerating mixture and the hydraulic binder.

When the inventive accelerator is in the form of a powder, it is also possible to add said powder accelerator already to a material which consists of the hydraulic binder or contains a hydraulic binder and further dry components and to pack and ship said premixture. Optionally said premixture can be prepared in the industrial plant where the hydraulic binder is made.

According to a preferred embodiment of the invention the setting and hardening accelerator is added in a process where spray mortar or spray concrete, also known as shotcrete, is prepared according to the dry spray procedure or the wet spray procedure.

When such a spray concrete is made it is possible to add the inventive set accelerating mixtures to the dry mixture which contains the hydraulic binder.

When a spray concrete or spray mortar is prepared, it is furthermore possible to add the inventive setting and hardening accelerator to a water containing composition or concrete which contains the hydraulic binder and furthermore water. The inventive setting and hardening accelerator can be introduced into the mixture to be sprayed at any stage of the shotcreting procedure, e.g. added in the mixing unit, in the pump which transports the mixture, in the line where the mixture is transported, in the prewettening nozzle or in the spray nozzle or together with the air used for spraying, or together with the water which is used for making the mixture to be sprayed, e.g. together with the water added in the spray nozzle when a dry shotcreting procedure is performed.

If the inventive setting and hardening accelerator is dissolved or dispersed in water before adding to the composition comprising at least one hydraulic binder, the accelerator to water ratio is preferably from 1:4 to 4:1, preferably from 2:5 to 5:2.

Preferably, the inventive setting and hardening accelerator is added in the amount of 0.1 to 15 wt.-% to the composition comprising at least one hydraulic binder, based on the total weight of all hydraulic binders.

If the inventive solid setting and hardening accelerator is added to mixtures which contain a hydraulic binder, like mortar or concrete, then there is observed a fast development of strength within the first minutes after adding the inventive solid setting and hardening accelerator. These results and also the final strength of the construction material are comparable to the results received with a conventional liquid accelerator despite the fact that the inventive solid setting accelerator is a heterogeneous mixture.

Thus according to the present invention, a cheap accelerator can be obtained which is as good as conventional liquid accelerators but with which production cost, transport cost and storage cost can be reduced.

The inventive mixtures and the inventive process will now be further illustrated through non limitative examples.

### Examples

### 1. Production of the solid accelerator of the invention

To produce the solid component **A** 33.73 wt.-% water, 39.19 wt.-% formic acid (85% solution in water) and 27.03 wt.-% amorphous aluminum hydroxide, based on the total weight of the liquid component **A,** were added into a container and stirred until the reaction had abated and the temperature had dropped to about 40°C. This resulted in a solution which, depending on the composition, could also contain finely dispersed particles. Depending on the mixture used, the water could also be used in preheated form, to accelerate the reaction. This liquid composition was spray dried to obtain the solid component **A.**

As the solid component **B,** 100 wt.-% aluminum sulfate (Al₂(SO₄)₃*14H₂O) was used.

The solid component **A** and the solid component **B** were mixed in an Eirich mixer and the solid accelerators **E1** to **E3** were received, see table 1.

**Table 1: Solid accelerator in % by weight**

| Example | Solid Component **A** | Solid Component **B** |
|---|---|---|
| **E1** | 20 | 80 |
| **E2** | 25 | 75 |
| **E3** | 30 | 70 |

### 2. Results in shotcrete

For testing the solid accelerators, they were dissolved in water with a concentration of 50 wt.-% powder material and are named as **E1L**, **E2L** and **E3L**.

The accelerator according to the invention can be added to hydraulic binders in an amount of from 0.1 to 15 wt.-% based on the total weight of hydraulic binders.

To determine the effectiveness of the accelerator according to the invention of Examples **E1** to **E3** a conventional concrete mixture for use as sprayed concrete was in each case admixed with 9% of the dissolved aqueous accelerator **E1L** to **E3L,** based on the content of the hydraulic binder. Portland cement was used as hydraulic binder.

As a comparative example, a liquid accelerator **LA** was used which contains 50 wt.-% aluminum sulfate (Al₂(SO₄)₃*14H₂O), 2 wt.-% formic acid, 4 wt.-% aluminum hydroxide, diethanolamine, sepiolite and water. The comparative accelerator **LA** was also added in an amount of 9% to the concrete mixture, based on the total weight of the hydraulic binder.

The accelerator was in each case introduced in the region of the spray nozzle during processing of the sprayed concrete. Optional other admixtures such as a plasticizer can be used, advantageously a polycarboxylate, particularly advantageously Sika ViscoCrete®.

For the examples presented a cement with the following characteristics was used: CEM 42.5 (type II/A-P of European Standard EN 197), W/C = 0.475, 1% Sika ViscoCrete®5000, available from Sika Chile, grout 0-3.2 mm.

After application of sprayed concrete the penetration resistance and the compressive strength of the sprayed concrete was determined.

The penetration resistance of the sprayed concrete was determined 2 minutes, 5 minutes and 10 minutes after spraying (see table 2). The penetration resistance was determined using a penetrometer Mecmesin AFG 500N (advanced force gauge).

For determining the compressive strength of the sprayed concrete, Rilem specimens having dimensions of 4x4x16 cm were taken from the concrete during the spraying process of the concrete. The compressive strength of these specimens was then determined by means of a hydraulic press.

**Table 2: Penetrometer results**

| Example | Penetrometer Resistance in N | | |
|---|---|---|---|
| | After 2 minutes | After 5 minutes | After 10 minutes |
| **E1L** | 289 | 384 | 414 |
| **E2L** | 329 | 370 | 384 |
| **E3L** | 343 | 333 | 404 |
| **LA** | 381 | 399 | 446 |

**Table 3: Compression strength in Kg/cm²**

| Example | Mean value compression strength | | | |
|---|---|---|---|---|
| | **8 h** | **24 h** | **7 d** | **28 d** |
| **E1L** | 74 | 251 | 514 | 658 |
| **E2L** | 52 | 239 | 503 | 712 |
| **E3L** | 51 | 226 | 534 | 701 |
| **LA** | 53 | 257 | 534 | 701 |

All the tested concrete mixtures with the accelerators **E1L** to **E3L** show good values in the penetrometer test and good values in compressive strength.

To test the stability of the solid accelerator **E1,** the heterogeneous mixtures **E1** containing solid component **A** and solid component **B** was stored for two months and then dissolved in water and the effectiveness of the dissolved accelerators **E1L** was determined (table 4).

**Table 4: Penetrometer results (N)**

| Example | Penetrometer Resistance in N | | |
|---|---|---|---|
| | After 2 minutes | After 5 minutes | After 10 minutes |
| **E1L** | 237 | 272 | 350 |
| **LA** | 208 | 200 | 298 |

The solid accelerator **E1L** shows very good stability characteristics and better results are achieved than with the comparative liquid accelerator **LA** which was also stored for two months.

The accelerators of the invention can also be used for hydraulic binders other than cement, for example mixed cements, lime, hydraulic lime, and gypsum, and also mortar and concrete produced there from.

The invention is of course not restricted to the exemplary embodiment shown and described. Obviously, numerous modifications and variations of the present invention are possible in light of the above teachings. It is therefore to be understood that within the scope of the appended claims, the invention may be practiced otherwise than as specifically described herein.

## Claims

1. A setting and hardening accelerator for hydraulic binders in the solid state obtainable by a process **characterized in that** the process comprises the following steps:
(a) bringing a liquid component **A** comprising at least the reaction product of acid and aluminum hydroxide into the solid state to receive a solid component **A**; and
(b) mixing the solid component **A** obtained in step (a) with a solid component **B,** wherein the solid component **B** comprises or consists of aluminum sulfate; and
(c) optionally adding at least one additional solid component **C** to the solid component **A** and the solid component **B**;
wherein the acid is formic acid, acetic acid and / or oxalic acid.

2. The solid accelerator according to claim 1, **characterized in that** in step (a) component **A** is brought into the solid state by spray drying.

3. The solid accelerator according to any one of the claims 1 or 2, **characterized in that** component **A** is chloride free.

4. The solid accelerator according to any one of the preceding claims, **characterized in that** the weight ratio of the solid component **A** to the solid component **B** in the solid accelerator is between 1:100 to 100:1, preferably between 1:10 to 10:1, more preferably between 1:1 to 1:6.

5. Use of the solid setting and hardening accelerator according to any one of the preceding claims for accelerating the setting and hardening of hydraulic setting compositions comprising at least one hydraulic binder.

6. The use according to claim 5, **characterized in that** the at least one hydraulic binder is cement, slag, gypsum or anhydrite.

7. The use according to any one of claims 5 or 6 in the dry or wet spraying process, preferably for shotcrete.

8. A process for accelerating the setting and hardening of hydraulic binders comprising the step of adding the accelerator of any one of claims 1 to 4 to a composition comprising at least one hydraulic binder, preferably to sprayable concrete mixture, wherein the accelerator is added in the solid form or is dissolved or dispersed in water before adding to the composition comprising at least one hydraulic binder.

9. The process according to claim 8, **characterized in that** the solid accelerator of any one of claims 1 to 4 is dissolved or dispersed in water before adding to the composition comprising at least one hydraulic binder and that the accelerator to water ratio is from 1:4 to 4:1.

10. The process according to any one of claims 8 or 9, **characterized in that** the accelerator is added in the amount of 0.1 to 15 wt.-% to the composition comprising at least one hydraulic binder, based on the total weight of all hydraulic binders.

## Patentansprüche

1. Erstarrungs- und Erhärtungsbeschleuniger für hydraulische Bindemittel in festem Zustand, der durch ein Verfahren erhältlich ist, **dadurch gekennzeichnet, dass** das Verfahren folgende Schritte umfasst:
(a) Bringen einer flüssigen Komponente **A,** die mindestens das Reaktionsprodukt von Säure und Aluminiumhydroxid umfasst, in den festen Zustand zum Erhalt einer festen Komponente **A;** und
(b) Mischen der in Schritt (a) erhaltenen festen Komponente **A** mit einer festen Komponente **B,** wobei die feste Komponente **B** Aluminiumsulfat umfasst oder daraus besteht; und
(c) gegebenenfalls Zugeben mindestens einer zusätzlichen festen Komponente **C** zu der festen Komponente **A** unter festen Komponente **B;**
wobei es sich bei der Säure um Ameisensäure, Essigsäure und/oder Oxalsäure handelt.

2. Fester Beschleuniger nach Anspruch 1, **dadurch gekennzeichnet, dass** in Schritt (a) Komponente **A** durch Sprühtrocknen in den festen Zustand gebracht wird.

3. Fester Beschleuniger nach einem der Ansprüche 1 oder 2, **dadurch gekennzeichnet, dass** Komponente **A** chloridfrei ist.

4. Fester Beschleuniger nach einem der vorhergehenden Ansprüche, **dadurch gekennzeichnet, dass** das Gewichtsverhältnis von fester Komponente **A** zu fester Komponente **B** in dem festen Beschleuniger 1:100 bis 100:1, vorzugsweise 1:10 bis 10:1, weiter bevorzugt 1:1 bis 1:6, beträgt.

5. Verwendung des festen Erstarrungs- und Erhärtungsbeschleunigers nach einem der vorhergehenden Ansprüche zur Beschleunigung des Erstarrens und Erhärtens von hydraulisch abbindenden Zusammensetzungen, die mindestens ein hydraulisches Bindemittel umfassen.

6. Verwendung nach Anspruch 5, **dadurch gekennzeichnet, dass** es sich bei dem mindestens einen hydraulischen Bindemittel um Zement, Schlacke, Gips oder Anhydrit handelt.

7. Verwendung nach einem der Ansprüche 5 oder 6 beim Trocken- oder Nassspritzverfahren, vorzugsweise für Spritzbeton.

8. Verfahren zur Beschleunigung des Erstarrens und Erhärtens von hydraulischen Bindemitteln, umfassend den Schritt des Zugebens des Beschleunigers nach einem der Ansprüche 1 bis 4 zu einer Zusammensetzung, die mindestens ein hydraulisches Bindemittel umfasst, vorzugsweise zu einer spritzbaren Betonmischung, wobei der Beschleuniger in fester Form zugegeben oder vor der Zugabe zu der Zusammensetzung, die mindestens ein hydraulisches Bindemittel umfasst, in Wasser gelöst oder dispergiert wird.

9. Verfahren nach Anspruch 8, **dadurch gekennzeichnet, dass** der feste Beschleuniger nach einem der Ansprüche 1 bis 4 vor der Zugabe zu der Zusammensetzung, die mindestens ein hydraulisches Bindemittel umfasst, in Wasser gelöst oder dispergiert wird und das Verhältnis von Beschleuniger zu Wasser 1:4 bis 4:1 beträgt.

10. Verfahren nach einem der Ansprüche 8 oder 9, **dadurch gekennzeichnet, dass** der Beschleuniger in einer Menge von 0,1 bis 15 Gew.-% zu der Zusammensetzung, die mindestens ein hydraulisches Bindemittel umfasst, gegeben wird, bezogen auf das Gesamtgewicht aller hydraulischen Bindemittel.

## Revendications

1. Accélérateur de prise et de durcissement pour des liants hydrauliques à l'état solide pouvant être obtenu par un procédé **caractérisé en ce que** le procédé comprend les étapes suivantes :
(a) l'étape consistant à amener un composant liquide **A** comprenant au moins le produit réactionnel d'acide et d'hydroxyde d'aluminium à l'état solide pour produire un composant solide **A** ; et
(b) le mélange du composant solide **A** obtenu dans l'étape (a) avec un composant solide **B,** le composant solide **B** comprenant du sulfate d'aluminium ou étant constitué de celui-ci ; et
(c) éventuellement l'ajout d'au moins un composant solide supplémentaire **C** au composant solide **A** et au composant solide **B** ;
dans lequel l'acide est l'acide formique, l'acide acétique et/ou l'acide oxalique.

2. Accélérateur solide selon la revendication 1, **caractérisé en ce que** dans l'étape (a) le composant **A** est amené à l'état solide par séchage par pulvérisation.

3. Accélérateur solide selon l'une quelconque des revendications 1 ou 2, **caractérisé en ce que** le composant **A** est exempt d'ions chlorure.

4. Accélérateur solide selon l'une quelconque des revendications précédentes, **caractérisé en ce que** le rapport pondéral du composant solide **A** au composant solide **B** dans l'accélérateur solide est compris entre 1:100 et 100:1, de préférence entre 1:10 et 10:1, de préférence encore entre 1:1 et 1:6.

5. Utilisation de l'accélérateur de prise et de durcissement solide selon l'une quelconque des revendications précédentes pour l'accélération de la prise et du durcissement de compositions à prise hydraulique comprenant au moins un liant hydraulique.

6. Utilisation selon la revendication 5, **caractérisée en ce que** l'au moins un liant hydraulique est du ciment, du laitier, du gypse ou de l'anhydrite.

7. Utilisation selon l'une quelconque des revendications 5 ou 6 dans le procédé de projection à sec ou en voie humide, de préférence pour du béton projeté.

8. Procédé pour l'accélération de la prise et du durcissement de liants hydrauliques comprenant l'étape d'ajout de l'accélérateur selon l'une quelconque des revendications 1 à 4 à une composition comprenant au moins un liant hydraulique, de préférence à un mélange de béton à projeter, dans lequel l'accélérateur est ajouté sous la forme solide ou est dissous ou dispersé dans de l'eau avant l'ajout à la composition comprenant au moins un liant hydraulique.

9. Procédé selon la revendication 8, **caractérisé en ce que** l'accélérateur solide selon l'une quelconque des revendications 1 à 4 est dissous ou dispersé dans de l'eau avant l'ajout à la composition comprenant au moins un liant hydraulique et **en ce que** le rapport accélérateur sur eau est de 1:4 à 4:1.

10. Procédé selon l'une quelconque des revendications 8 ou 9, **caractérisé en ce que** l'accélérateur est ajouté en quantité de 0,1 à 15 % en poids à la composition comprenant au moins un liant hydraulique, par rapport au poids total de tous les liants hydrauliques.
